# EUROPÄISCHE PATENTSCHRIFT

(11) **EP 2 571 747 B1**
(45) Veröffentlichungstag und Bekanntmachung des Hinweises auf die Patenterteilung: **18.03.2015**
(21) Anmeldenummer: 11730923.7
(22) Anmeldetag: 17.05.2011
(51) Int. Cl.: B62D 21/15, B62D 25/02, F16F 7/12

(54) **KRAFTFAHRZEUG MIT EINEM SEITENSCHWELLER**
MOTOR VEHICLE HAVING A SIDE SILL
VÉHICULE À MOTEUR POURVU D'UN BAS DE MARCHE LATÉRAL

(30) Priorität: 25.06.2010 DE 102010030535; 20.05.2010 DE 102010029175
(43) Veröffentlichungstag der Anmeldung: 27.03.2013
(73) Patentinhaber: Bayerische Motoren Werke Aktiengesellschaft, 80809 München (DE)
(72) Erfinder: FUCHS, Horst-Arno, 82319 Starnberg (DE); BIRZLE, Franz, 82402 Seeshaupt (DE); SCHNAUFER, Thomas, 82405 Wessobrunn (DE)
(86) Internationale Anmeldenummer: PCT/EP2011/057969
(87) Internationale Veröffentlichungsnummer: WO 2011/144613

(56) Entgegenhaltungen:
- EP-A1- 0 887 573
- EP-A2- 1 806 271
- DE-A1-102006 055 560
- DE-A1-102008 032 344
- DE-A1-102008 049 758
- DE-C1- 19 901 070
- US-A1- 2004 104 602
- US-A1- 2008 296 164

## Beschreibung

Die Erfindung betrifft ein Kraftfahrzeug mit einem Seitenschweller nach dem Oberbegriff des Patentanspruchs 1.

Im heutigen Kraftfahrzeugbau werden die meisten Seitenschweller in Schalenbauweise gebaut. Ein solcher Seitenschweller weist zumindest eine Innenschale und eine Außenschale auf, die an zwei, in Fahrzeuglängsrichtung verlaufenden Flanschen miteinander verbunden sind und dazwischen im Querschnitt gesehen einen Hohlraum umschließen.

Aus der EP 1 806 271 A2 ist bereits ein Kraftfahrzeug mit einem Seitenschweller bekannt, der in Schalenbauweise eine Innenschale und eine Außenschale aufweist, die im Querschnitt gesehen einen Hohlraum umschließen, wobei in diesem Hohlraum zumindest im - in Fahrzeuglängsrichtung gesehen - mittleren Bereich des Seitenschwellers ein Energieabsorber angeordnet ist.

Aufgabe der Erfindung ist es, ein Kraftfahrzeug mit einem Seitenschweller zu schaffen, der bei einem Seitencrash einen geringen Deformationsweg aufweist.

Diese Aufgabe wird mit einem Kraftfahrzeug mit einem Seitenschweller mit den Merkmalen des Patentanspruchs 1 oder 2 gelöst.

Erfindungsgemäß befindet sich im Hohlraum zwischen einer Innenschale und einer Außenschale eines Seitenschwellers zumindest im - in Fahrzeuglängsrichtung gesehen - mittleren Bereich des Seitenschwellers ein Energieabsorber. Zusätzlich ist entweder auf der der Innenschale zugewandten Seite des Energieabsorbers oder auf der der Fahrzeugmitte zugewandten Seite der Innenschale eine Zwischenschicht aus einem Kunststoffschaum aufgebracht. Auf dieser Zwischenschicht wiederum ist ein Zugband aufgebracht.

Bei einem konventionellen Seitenschweller in Schalenbauweise ohne zusätzliche Verstärkungen besteht die Gefahr, dass bei starken, von der Seite auf den Seitenschweller einwirkenden Kräften dieser einknickt, sodass es zu einer Deformation der Bodenbaugruppe kommen kann. Der erfindungsgemäße Energieabsorber nimmt durch Deformation zumindest einen Teil dieser einwirkenden Kräfte auf, er absorbiert sie. Dadurch erhöht er die Steifigkeit des Seitenschwellers und schützt die Bodenbaugruppe besonders gut vor Deformationen.

Die der einwirkenden Kraft zugewandte Seite des Seitenschwellers wird dabei Druckspannungen ausgesetzt, die der einwirkenden Kraft abgewandte Seite des Seitenschwellers wird Zugspannungen ausgesetzt. Um diese Zugspannungen gut aufnehmen zu können, ist auf der der Innenschale des Seitenschwellers zugewandten Seite des Energieabsorbers oder auf der der Fahrzeugmitte zugewandten Seite der Innenschale das Zugband aufgebracht, das beispielsweise aus einem kohlefaserverstärkten Kunststoff bestehen kann. Dieses Zugband verstärkt den Seitenschweller und kann vor allem diese auf der Innenseite des Seitenschwellers entstehenden Zugspannungen aufnehmen. Die Zwischenschicht stabilisiert bei einem Seitencrash den Energieabsorber, sodass er nicht verkippt und zusätzlich Deformationsenergie aufnehmen kann.

Bevorzugt füllt der Energieabsorber im Querschnitt gesehen den Hohlraum zumindest in Fahrzeugquerrichtung vollständig aus. Auf diese Weise ist sichergestellt, dass bei hohen Kräften, die die Außenschale des Seitenschwellers nicht alleine aufnehmen kann, von Anfang an zumindest ein Teil der Kräfte von dem Energieabsorber aufgenommen werden können. Der Energieabsorber kann nicht ausweichen, bevor er Kräfte in Fahrzeugquerrichtung aufnimmt, da er den Hohlraum zumindest in Fahrzeugquerrichtung vollständig ausfüllt.

Günstigerweise ist der Energieabsorber ein Formteil, das eine Mehrzahl von Wabenkammern aufweist. Die Wabenkammern sind dabei parallel zueinander angeordnet und grenzen aneinander an. Ein solcher Energieabsorber ist beispielsweise aus der DE 199 52 570 A1 bekannt. Der gesamte Offenbarungsgehalt der DE 199 52 570 A1 wird hiermit in diese Schrift mit aufgenommen. Diese Wabenstruktur ermöglicht es, dass der Energieabsorber ein relativ geringes Eigengewicht aufweist und zugleich sehr hohe Kräfte definiert aufnehmen kann. Dabei entspricht die Längserstreckung der Wabenkammern idealerweise im Wesentlichen der Fahrzeugquerrichtung. Die für einen Seitenschweller kritischste Belastung erfolgt ebenfalls in Fahrzeugquerrichtung. Bei in dieser Richtung wirkenden Kräften wird der Energieabsorber bzw. die Wände zwischen den einzelnen Wabenkammern in Fahrzeugquerrichtung zusammengestaucht. Der Energieabsorber deformiert sich dabei gezielt. In Abhängigkeit von der Größe der einzelnen Waben, den Wanddicken zwischen den Waben und dem verwendeten Material für den Energieabsorber kann die Wabenstruktur so ausgelegt werden, dass sie ab einer definierten Grenzlast gezielt sich zusammenstauchen lässt. Auch die Menge der dabei absorbierten Energie lässt sich so gezielt festlegen.

Bevorzugt weisen die Wabenkammern einen polygonalen Querschnitt auf. Insbesondere ein sechseckiger Querschnitt ist dabei vorteilhaft. Als Material für den Energieabsorber eignet sich insbesondere ein thermoplastischer Kunststoff ohne Glasfasern und ohne Glaskugeln. Bei der Wahl des optimalen Materials ist darauf zu achten, dass sich die Eigenschaften in den für Kraftfahrzeugen relevanten Temperatur-Spannen von ca. -35°C bis etwa +85°C nur möglichst wenig verändern, damit die Energieaufnahme des Seitenschwellers bei Temperaturschwankungen nur in möglichst engen Grenzen schwankt. Als sehr geeignet hat sich ein unverstärktes PC+PBT-Material herausgestellt, das eine sehr gute Tieftemperaturzähigkeit aufweist. Dieses Material besteht aus einer Mischung aus Polycarbonaten (PC) und Polybutylen Terephtalaten (PBT).

Gemäß einer weiteren vorteilhaften Ausgestaltung ist im Querschnitt gesehen die Höhenerstreckung des Energieabsorbers an der der Außenschale zugewandten Seite kleiner als im - in Fahrzeugquerrichtung gesehen - mittleren Bereich des Seitenschwellers. Jeder aus einem festen Material bestehende Energieabsorber hat eine unerwünschte Eigenschaft: Die Kräfte, die erforderlich sind, um die Deformation zu starten, sind wesentlich höher als die Kräfte, die nach dem Start der Deformation ausreichen, um den Energieabsorber weiter zu deformieren. Durch eine entsprechende Gestaltung kann diese Eigenschaft aufgefangen werden. Dazu wirken die Kräfte in Fahrzeugquerrichtung nicht von Anfang an auf die gesamte Höhenerstreckung, sondern nur auf einen Teilbereich. Dadurch beginnt die Deformation auch nur in diesem Teilbereich. Erst bei fortschreitender Deformation kommen die restlichen Bereiche des Energieabsorbers hinzu. Dadurch wird vermieden, dass zum Einleiten der Deformation zunächst sehr hohe Kräfte auf den Energieabsorber einwirken müssen. In der Praxis kann dieser Effekt dadurch erreicht werden, dass der Energieabsorber zur Fahrzeugaußenseite abgeschrägt ist.

Der Energieabsorber erstreckt sich bevorzugt zumindest über die halbe Länge des Seitenschwellers. Der am meisten beanspruchte Bereich des Seitenschwellers ist der mittlere Bereich. Dieser wird durch den Energieabsorber, der sich zumindest über die halbe Länge des Seitenschwellers erstreckt, effektiv verstärkt. Bei in Fahrzeugquerrichtung auf den Seitenschweller einwirkenden Kräften wirkt der Energieabsorber aufgrund seiner Längserstreckung wie ein Biegeträger.

Die Innenschale und / oder die Außenschale des Seitenschwellers bestehen bevorzugt aus einem Kunststoff, wie beispielsweise aus einem kohlefaserverstärkten Kunststoff (CFK). Kunststoffe haben gegenüber Blechbauteilen den Nachteil, dass sie eine geringere Duktilität aufweisen, sodass ihre Fähigkeit zur Energieaufnahme durch Deformation ziemlich beschränkt ist. Daher macht es besonders bei einem Seitenschweller aus Kunststoffschalen Sinn, einen solchen Energieabsorber im Hohlraum zwischen den beiden Schalen anzuordnen.

Weitere vorteilhafte Ausgestaltungen sind Gegenstand von Unteransprüchen.

In der Zeichnung ist ein Ausführungsbeispiel der Erfindung dargestellt, anhand dessen die Erfindung im Folgenden näher beschrieben wird. Die einzelnen Figuren zeigen in schematischer Darstellungsweise:
- Fig. 1: eine Seitenansicht eines Seitenrahmens mit einem Seitenschweller einer Kraftfahrzeugkarosserie,
- Fig. 2: einen Schnitt durch den Seitenschweller,
- Fig. 3: einen Seitenansicht eines Energieabsorbers und
- Fig. 4: einen Schnitt durch den Energieabsorber.

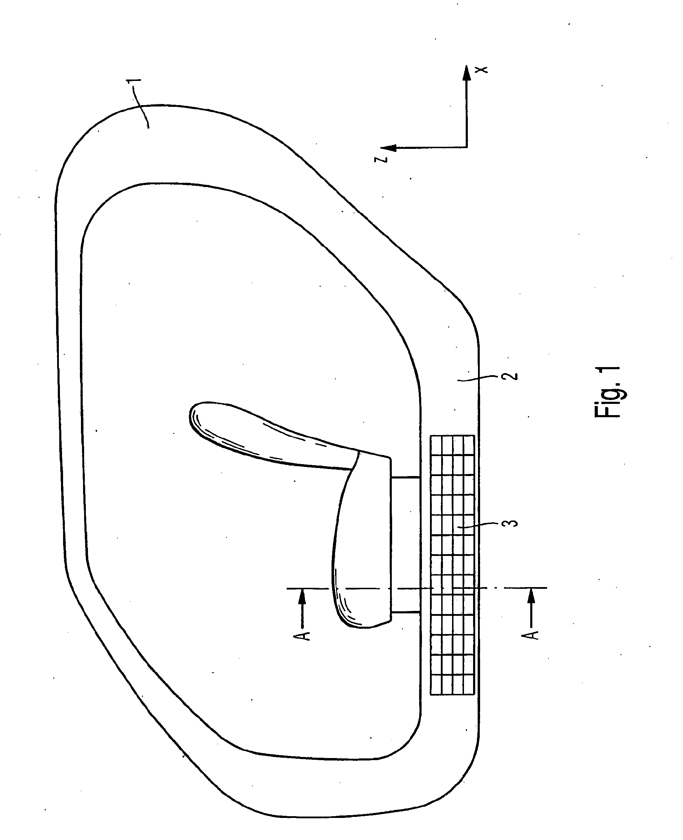

In Fig. 1 ist ein äußerer Seitenrahmen 1 einer Kraftfahrzeugkarosserie zu sehen. Zusammen mit einem inneren Seitenrahmen bildet der äußere Seitenrahmen 1 in Schalenbauweise die seitliche Begrenzung einer Fahrgastzelle des Kraftfahrzeugs. Er umgibt umlaufend den seitlichen Türausschnitt und bildet unten zugleich einen Seitenschweller 2. Die innere Seitenrahmen und der äußere Seitenrahmen 1 bestehen aus einem kohlenfaserverstärkten Kunststoff (CFK). Der Vorteil eines Seitenrahmens aus CFK besteht in seiner hohen Steifigkeit bei einem geringen Gewicht. Ein konventioneller Seitenrahmen aus Blechschalen mit eine vergleichbaren Steifigkeit weist ein deutlich höheres Gewicht auf.

Allerdings verhält sich ein Seitenschweller 2 in Schalenbauweise aus einem kohlenfaserverstärkten Kunststoff bei hohen, von der Seite einwirkenden Kräften, wie sie bei einem Crash vorkommen können, deutlich anders als ein Seitenschweller aus Blechschalen. Ein Seitenschweller aus Blechschalen kann sich stark verformen und dabei viel Crashenergie abbauen. Der Seitenschweller 2 aus CFK zerbricht bei Überschreiten der Festigkeitsgrenzen. Er kann dabei nur in geringem Maße Crashenergie aufbauen. Deshalb befindet sich - in Fahrzeuglängsrichtung x gesehen - im mittleren Bereich des Seitenschwellers 2 ein Energieabsorber 3. Der mittlere Bereich des Seitenschwellers 2 ist der Bereich, der bei einem Seitencrash am stärksten beansprucht wird. Der Energieabsorber 3 wirkt genau in diesem Bereich des Seitenschwellers 2. In Fig. 1 ist der Energieabsorber 3 dargestellt, obwohl er in Wirklichkeit in einer Seitenansicht von dem äußeren Seitenrahmen 1 verdeckt wäre.

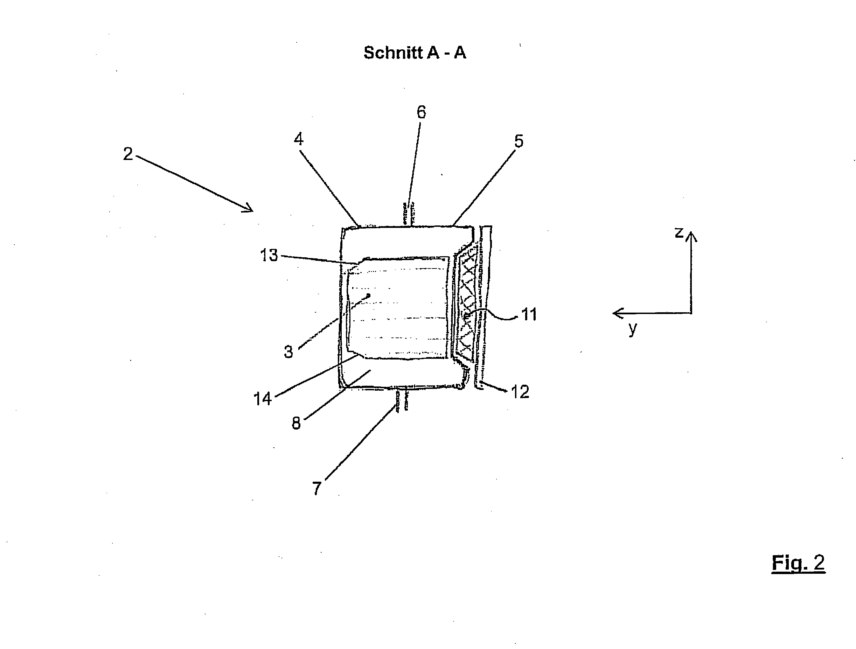

In Fig. 2 ist ein Schnitt durch den Seitenschweller 2 dargestellt. In dem Schnitt ist der äußere Seitenrahmen 1 zu sehen, der die Außenschale 4 des Seitenschwellers 2 bildet. Auch der innere Seitenrahmen ist zu sehen, der die Innenschale 5 des Seitenschwellers 2 bildet. Die Außenschale 4 und die Innenschale 5 des Seitenschwellers 2 sind über einen oberen Flansch 6 und einen unteren Flansch 7 in Schalenbauweise miteinander verbunden. Zwischen dem oberen und dem unteren Flansch 6 und 7 umschließen die Außenschale 4 und die Innenschale 5 einen Hohlraum 8, in dem im mittleren Bereich des Seitenschwellers 2 der Energieabsorber 3 angeordnet ist.

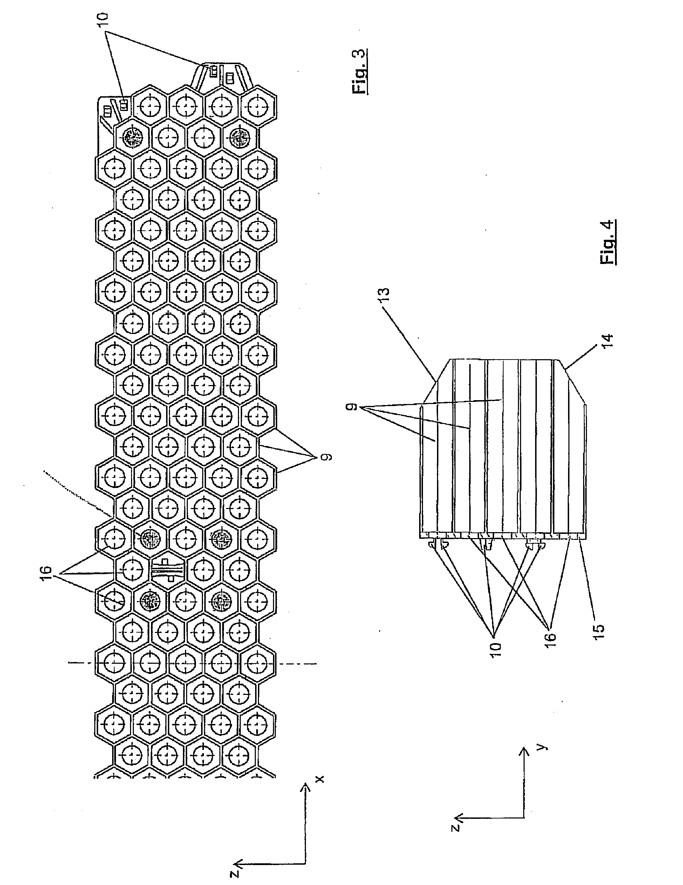

Der Energieabsorber 3 wird gebildet von einem Formteil aus dem Kunststoff PC+PBT-Material ohne Verstärkung mit Glasfasern oder Glaskugeln. Dies ist eine Mischung aus Polycarbonaten (PC) und Polybutylen Terephtalaten (PBT), die eine sehr gute Tieftemperaturzähigkeit aufweist. In den Figuren Fig. 3 und Fig. 4 ist der Energieabsorber 3 detailliert dargestellt.

Der Energieabsorber 3 besteht aus einer Vielzahl von sechseckigen Wabenkammern 9, die alle parallel zueinander angeordnet sind. Die Längserstreckung der Wabenkammern 9 entspricht der Fahrzeugquerrichtung y, wenn der Energieabsorber 3 im Seitenschweller 2 verbaut ist. Die energieabsorbierenden Eigenschaften des Energieabsorbers 3 werden maßgeblich beeinflusst durch die Kantenlänge der sechseckigen Wabenkammern und die Wandstärke zwischen den einzelnen Wabenkammern 9. Hier beträgt die Kantenlänge etwa 12 mm, die Wandstärke etwa 1,5 mm.

Bei hohen, vom Energieabsorber 3 aufzunehmenden Kräfte müssen diese anfangs eine Kraftspitze aufweisen, die groß genug ist, um eine erste Deformation der Wabenstruktur des Energieabsorbers 3 in Gang zu setzen. Nach dem Überschreiten dieser erforderlichen Kraftspitze werden die Wände zwischen den einzelnen Wabenkammern 10 zusammengestaucht. Nach dem Beginn der Deformation sind bereits deutlich geringere Kräfte ausreichend, um eine weitergehende Deformation zu erreichen. Damit nun diese Kraftspitze möglichst klein ist, ist der Energieabsorber 3 an seiner oberen, der Außenschale 4 zugewandten Kante 13 abgeschrägt und an seiner unteren, der Außenschale 4 zugewandten Kante 14 abgeschrägt. Dadurch können bei einem Seitencrash zunächst nur die Wabenkammern 9 in der Höhenerstreckung z gesehen im mittleren Bereich Crashenergie aufnehmen, da nur diese Wabenkammern 9 zu Beginn des Seitencrashs an der Außenschale 4 anliegen. Erst wenn bei diesen mittleren Wabenkammern 9 die Deformation eingesetzt hat und diese Wabenkammern 9 bereits zusammengestaucht sind, kommen die restlichen Wabenkammern 9, deren Endbereiche abgeschrägt sind, zur Energieaufnahme hinzu. Die beiden abgeschrägten Kanten 13 und 14 verhindern so, dass eine unerwünscht hohe Kraftspitze erforderlich ist, bis der Energieabsorber 9 deformiert wird.

Die vom Energieabsorber 3 nicht aufgenommenen Kräfte werden durch den Energieabsorber in die Innenschale 5 geleitet. Damit diese Krafteinleitung nicht nur durch die schmalen Stirnseiten der Wände zwischen den Wabenkammern 9 erfolgt, weist der Energieabsorber 3 auf der der Innenschale 5 zugewandten Seite eine flächige, angespritzte Platte 15 auf, die an der Innenschale 5 anliegt. Diese Platte 15 weist jeweils zentrisch zu jeder Wabenkammer 9 eine kreisrunde Ausnehmung 16 auf. Die Platte 15 leitet die Kräfte flächig vom Energieabsorber 3 in die Innenschale 5 ein, sodass die Gefahr relativ gering ist, dass die Innenschale 5 lokal bricht oder splittert.

Der Energieabsorber 3 weist auf der der Innenschale 5 des Seitenschwellers 2 zugewandten Seite mehrere Clipse 10 auf, mit denen er mit der Innenschale 5 verclipst ist. Die Innenschale 5 weist zudem mehrere, zum Energieabsorber 3 abstehende Dome aus Harz auf, die einstückig an die Innenschale 5 angeformt sind. Diese Dome greifen formschlüssig in bestimmte Ausnehmungen 16 ein, sodass ein zusätzlicher Formschluss zwischen Energieabsorber 3 und Innenschale 5 gegeben ist. Diese Formschlüsse verhindern ein unerwünschtes Verlagern des Energieabsorbers 3 im Seitenschweller 2 in Fahrzeuglängsrichtung x. In der Fertigung wird zunächst der Energieabsorber 3 mit der Innenschale 5 verclipst, sodass er mit dieser formschlüssig verbunden ist. Erst danach wird die Außenschale 4 gefügt.

Der Energieabsorber 3 füllt zumindest in Fahrzeugquerrichtung y den Hohlraum 8 zwischen der Außenschale 4 und der Innenschale 5 vollständig aus, wie es in Fig. 2 gut erkennbar ist. Der Energieabsorber 3 stützt sich in Fahrzeugquerrichtung y also sowohl an der Außenschale 4 als auch an der Innenschale 5 ab.

Auf der der Fahrzeugmitte zugewandten Seite der Innenschale 5 des Seitenschwellers ist zusätzlich eine Zwischenschicht 11 aus einem Kunststoffschaum an- oder aufgebracht. Auf der der Fahrzeugmitte zugewandten Seite dieser Zwischenschicht 11 ist wiederum ein Zugband 12 aus einem kohlefaserverstärkten Kunststoff angebracht. An den Seitenschweller 2 grenzt an seiner Innenseite eine nicht dargestellte Bodenbaugruppe an. Die Innenschale 5 weist in ihrer Höhenerstreckung z im mittleren Bereich eine Vertiefung zur Außenschale 4 hin auf, in der die Zwischenschicht 11 angeordnet ist. Dadurch liegt das Zugband 12 an der Zwischenschicht 11 an, es ist mit seinem oberen und unteren Randbereich aber zusätzlich direkt an der Innenschale 5 angebunden. Die Zwischenschicht 11 und das Zugband 12 erstrecken sich in Fahrzeuglängsrichtung x jeweils zumindest in dem Bereich, in dem auch der Energieabsorber 3 angeordnet ist. Idealerweise erstrecken sie sich über die gesamte Länge des Seitenschwellers 2.

Der gesamte Seitenschweller 2 kann für in Fahrzeugquerrichtung einwirkende Kräfte als Biegeträger betrachtet werden. Dabei wirken auf der Außenseite des Seitenschwellers 2, die der einwirkenden Kraft zugewandt ist, hohe Druckkräfte, während auf der Innenseite des Seitenschwellers 2, die der einwirkenden Kraft abgewandt ist, hohe Zugkräfte wirken. Das Zugband 12 nimmt zumindest einen Teil dieser Zugkräfte auf und verstärkt so die Innenschale 5 des Seitenschwellers 2.

Ein auf diese Weise aufgebauter Seitenschweller 2 weist eine so hohe Steifigkeit auf, dass die Außenschale 4 und die Innenschale 5 - wie in diesem Ausführungsbeispiel beschrieben - auch aus einem Kunststoff bestehen können, der aufgrund seiner Materialeigenschaften eine wesentlich geringere Duktilität als Stahlbleche aufweist. Trotzdem ist ein solcher Seitenschweller 2 sehr steif, er schützt die dahinterliegende Bodenbaugruppe sehr gut vor unerwünschten Beschädigungen.

Bei einem Seitencrash wird zunächst die Außenschale 4 beschädigt werden. Danach wird der Energieabsorber 3 deformiert. Dabei werden die Wände zwischen den Wabenkammern 9 zusammengestaucht und nehmen dabei einen erheblichen Teil der Crashenergie auf. Die Innenschale 5 ist durch das Zugband 12 bezüglich der hohen Zugkräfte gut geschützt.

## Patentansprüche

1. Kraftfahrzeug mit einem Seitenschweller (2), der in Schalenbauweise eine Innenschale (5) und eine Außenschale (4) aufweist, die im Querschnitt gesehen einen Hohlraum (8) umschließen, wobei in diesem Hohlraum (8) zumindest im - in Fahrzeuglängsrichtung (x) gesehen - mittleren Bereich des Seitenschwellers (2) ein Energieabsorber (3) angeordnet ist, **dadurch gekennzeichnet, dass** auf der der Innenschale (5) zugewandten Seite des Energieabsorbers (3) eine Zwischenschicht (11) aus einem Kunststoffschaum aufgebracht ist, und wobei auf der der Innenschale (5) zugewandten Seite der auf den Energieabsorber (3) aufgebrachten, dämpfenden Zwischenschicht (11) ein Zugband (12) aufgebracht ist.

2. Kraftfahrzeug mit einem Seitenschweller (2), der in Schalenbauweise eine Innenschale (5) und eine Außenschale (4) aufweist, die im Querschnitt gesehen einen Hohlraum (8) umschließen, wobei in diesem Hohlraum (8) zumindest im - in Fahrzeuglängsrichtung (x) gesehen - mittleren Bereich des Seitenschwellers (2) ein Energieabsorber (3) angeordnet ist, **dadurch gekennzeichnet, dass** auf derin Fahrzeugquerrichtung (y) gesehen - der Fahrzeugmitte zugewandten Seite der Innenschale (5) eine Zwischenschicht (11) aus einem Kunststoffschaum aufgebracht ist, und wobei auf der - in Fahrzeugquerrichtung (y) gesehen - der Fahrzeugmitte zugewandten Seite der Zwischenschicht (11) ein Zugband (12) aufgebracht ist.

3. Kraftfahrzeug nach einem der vorhergehenden Ansprüche, **dadurch gekennzeichnet, dass** der Energieabsorber (3) zumindest in Fahrzeugquerrichtung (y) in den Seitenschweller (2) eingeleitete Kräfte durch Deformation zumindest teilweise absorbieren kann.

4. Kraftfahrzeug nach Anspruch 3, **dadurch gekennzeichnet, dass** der Energieabsorber (3) im Querschnitt gesehen den Hohlraum (8) zumindest in Fahrzeugquerrichtung (y) vollständig ausfüllt.

5. Kraftfahrzeug nach einem der vorhergehenden Ansprüche, **dadurch gekennzeichnet, dass** der Energieabsorber (3) ein eine Mehrzahl von Wabenkammern (9) aufweisendes Formteil ist, wobei die Wabenkammern (9) aneinander angrenzend und parallel zueinander angeordnet sind.

6. Kraftfahrzeug nach Anspruch 5, **dadurch gekennzeichnet, dass** die Längserstreckung der Wabenkammern (9) im Wesentlichen der Fahrzeugquerrichtung (y) entspricht.

7. Kraftfahrzeug nach Anspruch 5 oder 6, **dadurch gekennzeichnet, dass** die Wabenkammern (9) einen polygonalen Querschnitt aufweisen.

8. Kraftfahrzeug nach Anspruch 7, **dadurch gekennzeichnet, dass** die Wabenkammern (9) einen sechseckigen Querschnitt aufweisen.

9. Kraftfahrzeug nach einem der vorhergehenden Ansprüche, **dadurch gekennzeichnet, dass** im Querschnitt gesehen die Höhenerstreckung (z) des Energieabsorbers (3) an der der Außenschale (4) zugewandten Seite kleiner ist als im - in Fahrzeugquerrichtung (y) gesehen - mittleren Bereich des Seitenschwellers (2).

10. Kraftfahrzeug nach einem der vorhergehenden Ansprüche, **dadurch gekennzeichnet, dass** der Energieabsorber (3) aus einem thermoplastischen Kunststoff ohne Glasfasern und ohne Glaskugeln besteht.

11. Kraftfahrzeug nach einem der vorhergehenden Ansprüche, **dadurch gekennzeichnet, dass** der Energieabsorber (3) an der Innenschale (5) des Seitenschwellers (2) befestigt ist.

12. Kraftfahrzeug nach Anspruch 11, **dadurch gekennzeichnet, dass** der Energieabsorber (3) mit der Innenschale (5) verklebt oder verclipst ist.

13. Kraftfahrzeug nach einem der vorhergehenden Ansprüche, **dadurch gekennzeichnet, dass** die Innenschale (5) und / oder die Außenschale (4) des Seitenschwellers (2) aus einem Kunststoff bestehen.

14. Kraftfahrzeug nach Anspruch 13, **dadurch gekennzeichnet, dass** die Innenschale (5) und / oder die Außenschale (4) aus einem kohlefaserverstärkten Kunststoff (CFK) bestehen.

15. Kraftfahrzeug nach einem der vorhergehenden Ansprüche, **dadurch gekennzeichnet, dass** der Energieabsorber (3) in Fahrzeuglängsrichtung (x) sich zumindest über die halbe Länge des Seitenschwellers (2) erstreckt.

## Claims

1. A motor vehicle comprising a sillboard (2) in shell construction having an inner shell (5) and an outer shell (4) which, seen in cross-section, enclose a cavity (8), wherein an energy absorber (3) is disposed in the cavity (8) at least in the central region of the sillboard (2), seen in the longitudinal direction (x) of the vehicle, **characterised in that** an intermediate layer (11) of plastic foam is disposed on the side of the energy absorber (3) facing the inner shell (5) and wherein a tie rod (12) is disposed on the side, facing the inner shell (5), of the intermediate layer (11) which is shock-absorbing and is placed on the energy absorber (3).

2. A motor vehicle comprising a sillboard (2) in shell construction having an inner shell (5) and an outer shell (4) which, seen in cross-section, enclose a cavity (8), wherein an energy absorber (3) is disposed in the cavity (8) at least in the central region of the sillboard (2), seen in the longitudinal direction (x) of the vehicle, **characterised in that** an intermediate layer (11) of plastic foam is placed on the side, seen in the transverse direction (y) of the vehicle, of the inner shell (5) facing the middle of the vehicle and wherein a tie rod (12) is placed on the side of the intermediate layer (11) facing the middle of the vehicle, seen in the transverse direction (y) of the vehicle.

3. A vehicle according to any of the preceding claims, **characterised in that** the energy absorber (3) can by deformation at least partly absorb forces exerted in the sillboard (2), at least in the transverse direction (y) of the vehicle.

4. A vehicle according to claim 3, **characterised in that** the energy absorber (3), seen in cross-section, completely fills the cavity (8), at least in the transverse direction (y) of the vehicle.

5. A vehicle according to any of the preceding claims, **characterised in that** the energy absorber (3) is a moulded part comprising a number of honeycomb cells (9), wherein the cells (9) adjoin and are parallel to one another.

6. A vehicle according to claim 5, **characterised in that** the honeycomb cells (9) extend longitudinally, substantially in the transverse direction (y) of the vehicle.

7. A vehicle according to claim 5 or claim 6, **characterised in that** the honeycomb cells (9) have a polygonal cross-section.

8. A vehicle according to claim 7, **characterised in that** the honeycomb cells (9) have a hexagonal cross-section.

9. A vehicle according to any of the preceding claims, **characterised in that**, seen in cross-section, the height (z) of the energy absorber (3) on the side facing the outer shell (4) is less than in the central region of the sillboard (2), seen in the transverse direction (y) of the vehicle.

10. A vehicle according to any of the preceding claims, **characterised in that** the energy absorber (3) is made of a thermoplastics material without glass fibres and without glass balls.

11. A vehicle according to any of the preceding claims, **characterised in that** the energy absorber (3) is fastened to the inner shell (5) of the sillboard (2).

12. A vehicle according to claim 11, **characterised in that** the energy absorber (3) is stuck or clipped to the inner shell (5).

13. A vehicle according to any of the preceding claims, **characterised in that** the inner shell (5) and/or the outer shell (4) of the sillboard (2) are made of a plastics material.

14. A vehicle according to claim 13, **characterised in that** the inner shell (5) and/or the outer shell (4) are made of a carbon fibre-reinforced plastics material (CFK).

15. A vehicle according to any of the preceding claims, **characterised in that** in the longitudinal direction (x) of the vehicle, the energy absorber (3) extends over at least half the length of the sillboard (2).

## Revendications

1. Véhicule automobile comportant un marche pied latéral (2) réalisé en forme de coquille avec une coquille interne (5) et une coquille externe (4) qui entourent transversalement un volume creux (8), dans lequel est positionné un absorbeur d'énergie (3) au moins dans la zone médiane du marche pied latéral (2), considérée dans la direction longitudinale (x) du véhicule,
**caractérisé en ce que**
sur la face de l'absorbeur d'énergie (3) tournée vers la coquille interne (5) est appliquée une couche intermédiaire (11) en une mousse synthétique, et, sur la face tournée vers la coquille interne (5) de cette couche intermédiaire d'amortissement (11) appliquée sur l'absorbeur d'énergie (3) est appliquée une bande de traction (12).

2. Véhicule comportant un marche pied latéral (2) réalisé en forme de coquille avec une coquille interne (5) et une coquille externe (4) qui entourent transversalement un volume creux (8), dans lequel est positionné un absorbeur d'énergie (3) au moins dans la zone médiane du marche pied latéral (2), considérée dans la direction longitudinale (x) du véhicule,
**caractérisé en ce que**
sur la face de la coquille interne (5) tournée vers le milieu du véhicule dans la direction transversale (y) de ce véhicule est appliquée une couche intermédiaire (11) en une mousse synthétique, et sur la face de la couche intermédiaire (11) tournée vers le milieu du véhicule dans la direction transversale (y) de ce véhicule est positionnée une bande de traction (12).

3. Véhicule conforme à l'une des revendications précédentes,
**caractérisé en ce que**
l'absorbeur d'énergie (3) peut absorber au moins partiellement par déformation, au moins dans la direction transversale (y) du véhicule les forces exercées sur le marche pied latéral (2).

4. Véhicule conforme à la revendication 3,
**caractérisé en ce que**
l'absorbeur d'énergie (3) remplit partiellement le volume creux (8) considéré transversalement au moins dans la direction transversale (y) du véhicule.

5. Véhicule conforme à l'une des revendications précédentes,
**caractérisé en ce que**
l'absorbeur d'énergie (3) est un élément moulé comportant une série de chambres en nids d'abeilles, ces chambres en nids d'abeilles (9) étant adjacentes et situées parallèlement les unes aux autres.

6. Véhicule conforme à la revendication 5,
**caractérisé en ce que**
l'extension longitudinale des chambres en nids d'abeilles (9) correspond essentiellement à la direction transversale (y) du véhicule.

7. Véhicule conforme à la revendication 5 ou 6,
**caractérisé en ce que**
les chambres en nids d'abeilles (9) ont une section polygonale.

8. Véhicule conforme à la revendication 7,
**caractérisé en ce que**
les chambres en nids d'abeilles (9) ont une section hexagonale.

9. Véhicule conforme à l'une des revendications précédentes,
**caractérisé en ce que**
considérée transversalement, l'extension en hauteur (z) de l'absorbeur d'énergie (3) du côté tourné vers la coquille externe (4) est inférieure à son extension en hauteur (z) dans la zone médiane du marche pied (2) considérée dans la direction transversale (y) du véhicule.

10. Véhicule conforme à l'une des revendications précédentes,
**caractérisé en ce que**
l'absorbeur d'énergie (3) est réalisé en un matériau thermoplastique exempt de fibres de verre et de billes de verre.

11. Véhicule conforme à l'une des revendications précédentes, **caractérisé en ce que**
l'absorbeur d'énergie (3) est fixé sur la coquille interne (5) du marche pied latéral (2).

12. Véhicule conforme à la revendication 12,
**caractérisé en ce que**
l'absorbeur d'énergie (3) est collé ou clipsé sur la coquille interne (5).

13. Véhicule conforme à l'une des revendications précédentes,
**caractérisé en ce que**
la coquille interne (5) et/ou la coquille externe (4) du marche pied latéral (2) est ou sont réalisée(s) en un matériau synthétique.

14. Véhicule conforme à la revendication 13,
**caractérisé en ce que**
la coquille interne (5) et/ou la coquille externe (4) est ou sont réalisée(s) en une matière plastique renforcée par des fibres de carbone (CFK).

15. Véhicule conforme à l'une des revendications précédentes,
**caractérisé en ce que**
l'absorbeur d'énergie (3) s'étend dans la direction transversale (x) du véhicule au moins sur la moitié de la longueur du marche pied latéral (2).
